# EUROPEAN PATENT APPLICATION

(11) **EP 2 259 609 A1**
(43) Date of publication of application: **08.12.2010**
(21) Application number: 09735839.4
(22) Date of filing: 20.04.2009
(51) Int. Cl.: H04W 4/12, H04L 12/58

(54) **CONVERSATION METHOD, SYSTEM AND DEVICE**

(30) Priority: 23.04.2008 CN 200810093945
(71) Applicant: Huawei Technologies Co., Ltd., Longgang District, Shenzhen Guangdong 518129 (CN)
(72) Inventor: WU, Xiangdi, Shenzhen (CN); WANG, Jinzhi, Shenzhen (CN); HUANG, Yonghao, Shenzhen (CN); WU, Xianyu, Shenzhen (CN); WU, Xiujuan, Shenzhen (CN); CHEN, Genghua, Shenzhen (CN); CHEN, Guangjing, Shenzhen (CN)
(74) Representative: Kreuz, Georg Maria
(86) International application number: PCT/CN2009/071366
(87) International publication number: WO 2009/129733

(57) **Abstract**

A method, system, and device for conversation are provided. The method includes the following steps. A calling request that a calling user in a conversation invites a called user to join in the conversation is received. It is detected whether the called user is on-line according to the calling request. When it is detected that the called user is off-line, off-line calling information of inviting the called user to join in the conversation is recorded. When it is detected that the called user is on-line, it is further detected whether the conversation in the off-line calling information is ended. If the conversation is not ended, the called user joins in the conversation.

## Description

### METHOD, SYSTEM, AND DEVICE FOR CONVERSATION

The application claims the benefit of priority to China Patent Application No. 200810093945.7, filed on April 23, 2008, and entitled "METHOD, SYSTEM, AND DEVICE FOR CONVERSATION ", which is incorporated herein by reference in its entirety.

### FIELD OF THE TECHNOLOGY

The present invention relates to the field of communication technology, and more particularly to a method, system, and device for conversation.

### BACKGROUND OF THE INVENTION

The Push to talk over Cellular (PoC) is a "push to talk" service based on a wireless mobile network, which is a half duplex speech service that allows instant communication of a user through a specific key of a mobile phone terminal. The PoC is a communication service based on the Voice over Internet Protocol (VoIP) technology. The VoIP adopts a technology different from that for the conventional Public Switched Telephone Network (PSTN) telephone, and is a communication mode in which an IP network and the IP bear the speech. The essence of the PoC is to adopt a packet switching technology to realize a real-time cluster intercom function in a cellular network.

In the process of establishing PoC conversation in the prior art, the PoC server examines whether a called user is on-line. If the user is on-line, a Session Initiation Protocol (SIP) Invite request is sent to a core network to invite the called party to join in the conversation. If the user is not on-line, the PoC server sends a 4xx response to the calling user to abandon the conversation.

### SUMMARY OF THE INVENTION

In the embodiments, the present invention is directed to a method, system, and device for conversation, so as to ensure that a user acquires calling situation when the user is off-line, thereby enhancing a service experience of a user.

In order to achieve the objectives above, in an embodiment, the present invention provides a conversation method, which includes the following steps.

A calling request that a calling user in a conversation invites a called user to join in the conversation is received.

It is detected whether the called user is on-line according to the calling request. When it is detected that the called user is off-line, off-line calling information of inviting the called user to join in the conversation is recorded.

When it is detected that the called user is on-line, it is further detected whether the conversation in the off-line calling information is ended. If the conversation is not ended, the called user joins in the conversation.

In an embodiment, the present invention further provides a conversation server, which includes a receiving module, a first detection module, a record trigger module, a second detection module, and a conversation invitation module.

The receiving module is adapted to receive a calling request that a calling user in a conversation invites a called user to join in the conversation.

The first detection module is adapted to detect whether the called user is on-line.

The record trigger module is adapted to trigger a recording network element to record off-line calling information of inviting the called user to join in the conversation when the first detection module detects that the called user is off-line.

The second detection module is adapted to further detect whether the conversation in the off-line calling information of the called user is ended when the first detection module detects that the called user is on-line.

The conversation invitation module is adapted to enable the called user that is on-line as detected by the first detection module to join in the conversation in the off-line calling information that is not ended as detected by the second detection module.

In an embodiment, the present invention further provides a recording network element, which includes an off-line calling information recording module.

The off-line calling information recording module is adapted to record off-line calling information that a calling user invites a called user to join in a conversation when the called user is off-line, so as to facilitate a conversation server to detect whether the conversation in the off-line calling information is ended when the called user is on-line. If the conversation is not ended, the called user joins in the conversation.

In an embodiment, the present invention further provides a conversation system, which includes a conversation server and a recording network element.

The conversation server is adapted to receive a calling request that a calling user in a conversation invites a called user to join in the conversation, detect whether the called user is on-line according to the calling request, and when it is detected that the called user is on-line, trigger a recording network element to record off-line calling information of inviting the called user to join in the conversation, further detect whether the conversation in the off-line calling information is ended, and if the conversation is not ended, enable the detected on-line called user to join in the conversation.

The recording network element is adapted to record the off-line calling information of inviting the called user to join in the conversation.

Compared with the prior art, in the embodiments of the present invention, the technical solutions have advantages as follows.

By providing a recording network element, the user can learn his own information of being called when the user is not on-line and inform a server of how to save records of callings for the user. When the user is on-line, the server can automatically invite a user to join in a currently existing conversation according to a policy set by the user. Such a device can reduce a probability that the user loses important conversation information and can enhance a good use experience of the user.

### BRIEF DESCRIPTION OF THE DRAWINGS

FIG. 1 is a flow chart of a method for conversation according to a first embodiment of the present invention;
FIG. 2 is a flow chart of a method for conversation according to a second embodiment of the present invention; and
FIG. 3 is a schematic architecture view of a system for conversation according to a third embodiment of the present invention.

### DETAILED DESCRIPTION OF THE EMBODIMENTS

The embodiments of the present invention are elaborated below with reference to accompanying drawings.

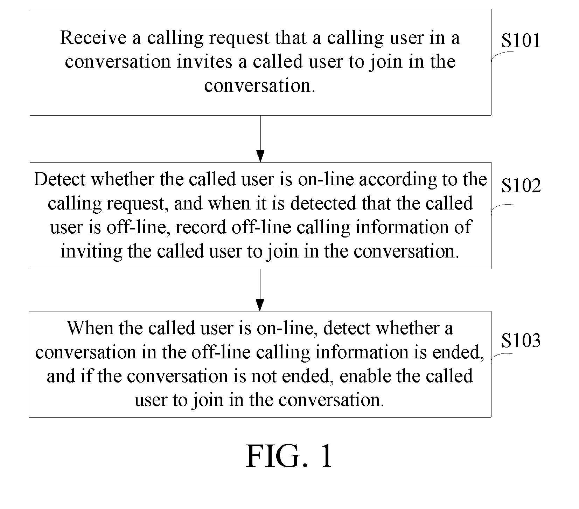

In a first embodiment, the present invention provides a conversation method. As shown in FIG. 1, the method includes the following steps.

In Step S101, a calling request that a calling user in a conversation invites a called user to join in the conversation is received.

In Step S102, it is detected whether the called user is on-line according to the calling request. When it is detected that the called user is off-line, the information of inviting the called user to join in the conversation is recorded as off-line calling information.

In Step S103, when it is detected that the called user is on-line, it is further detected whether a conversation recorded in the off-line calling information is ended. If the conversation is not ended, the called user is enabled to join in the conversation.

In this embodiment, the method further includes the following steps before Step S103.

The called user acquires the off-line calling information, and sets and records a call policy according to the off-line calling information. When it is detected that the called user is on-line and the conversation in the off-line calling information is not ended, the call policy is acquired and the called user joins in the conversation corresponding to the call policy according to the call policy.

The acquisition of the off-line calling information by the called user includes the following steps. A called user sends a request and receives off-line calling information corresponding to the request, or the called user receives the off-line calling information in real time or regularly, so that the called user can acquire off-line calling information even in an off-line state.

For example, a recording network element records the off-line calling information of inviting the called user to join in the conversation. A request is sent to the recording network element, so that the recording network element sends off-line calling information to the called user according to the request. Alternatively, the recording network element automatically sends the off-line calling information to the called user in real time or regularly to enable the called user to acquire all off-line calling information when off-line, and a call policy is set according to the off-line calling information. The setting of the call policy includes the following steps. According to the off-line calling information, one or more of priority information of the calling user, priority information of conversation start time, black list information, and calling user information of the concurrent invitation in all the off-line calling information are set. Next, the called user sends a call policy set according to the off-line calling information to the recording network element. When the called user is on-line and the conversation recorded in the off-line calling information is not ended, the call policy is acquired. According to the set call policy, the called user joins in the conversation corresponding to the call policy, for example, joins in the conversation having a high priority level (the calling user or the start time of the conversation can be used as a reference) or joins in a plurality of concurrent conversations at the same time or rejects a conversation that is not ended currently.

A common call policy is formulated according to the recorded off-line calling information. The system may also save some call policies that are known to or preset by called users. For example, when the called user does not formulate a specific call policy, the called user first joins in the conversation that is not ended and has the earliest conversation start time according to the priority information of the conversation start time. Alternatively, the called user is invited to join in a plurality of conversations that is not ended currently. In the concurrent conversations, the called user can also perform corresponding operations according to its own intentions or can also adjust the call policy dynamically.

In this embodiment, in order to release storage space and clear the off-line calling information and the corresponding call policy in time, save period of the off-line calling information and the call policy set according to the off-line calling information can be further set. When the save period expires, the off-line calling information and the call policy are deleted, or the off-line calling information and the call policy are set to an invalid state and log data is saved.

In this embodiment, an off-line user can learn information of being called when the user is off-line. When the call policy is set for the user, the user joins in the conversation corresponding to the call policy according to the call policy, and shields some conversations rejected by the user by setting the black list, so as to further enhance a user experience.

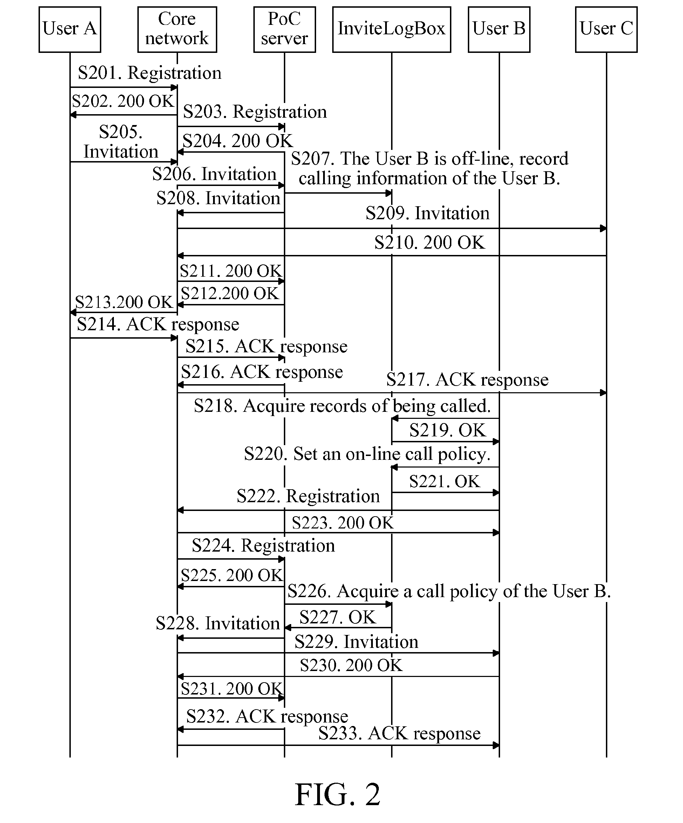

In a second embodiment, the present invention provides a conversation method. As shown in FIG. 2, the first embodiment is applied to a specific scenario. A conversation server represented by a Push to talk over Cellular (PoC) server establishes a conversation according to user settings and the call policy. The recording network element is an InviteLogBox. After the called user is on-line, the called user is called automatically The conversation process is as follows.

In Step S201, a user A sends a Session Initiation Protocol (SIP) Register request to a core network to get registered and on-line.

In Step S202, the core network returns a 200 OK and the user A is registered successfully.

In Step S203, the core network sends the SIP Register to the PoC server to inform that the user is on-line.

In Step S204, PoC server returns the 200 OK.

In Step S205, the user A sends an Invite request to the core network to invite a user B and a user C to join in the PoC conversation.

In Step S206, the core network forwards the request to the PoC server.

In Step S207, the PoC server finds that the user B is not on-line, so that the PoC server sends a called record save request to instruct the InviteLogBox to save the called record. The InviteLogBox records information such as an initiator, a start time, a called party, and conversation subject according to pre-settings of the user B.

In Step S208, the PoC server sends an Invite request to the core network to invite the user C to join in the conversation.

In Step S209, the core network sends the request to the user C.

In Step S210, the user C accepts the request, returns the 200 OK, and joins in the conversation.

In Step S211, the core network sends the 200 OK of the user C to the PoC server.

In Step S212, PoC server sends the 200 OK to the core network.

In Step S213, the core network sends the 200 OK to the user A.

In Step S214, user A returns an ACK response to the core network.

In Step S215, the core network forwards the ACK to PoC server.

In Step S216, the PoC server sends the ACK response to the user C through the core network.

In Step S217, the core network sends the ACK response to the user C.

In Step S218, the user B acquires its own call record information from the InviteLogBox in various modes (which can be acquired after getting registered and on-line, and in the embodiment of the present invention, the acquisition is implemented before the user is registered and on-line, that is, acquisition in an off-line state), for example, by sending a request such as an Extensible Markup Language Configuration Access Protocol (XCAP) request or an SIP request, or the InviteLogBox provides the call record information to the off-line called user B in real time or regularly in various modes according to the off-line calling information.

In Step S219, the InviteLogBox returns OK and sends records that the user B is called to the user B.

In Step S220, the user B sets its own mode of recording calling information and called policy.

In Step S220, items that the user can set includes, but not limited to, the following.
1) Save records of invitations of 1-1 and ad-hoc conversations to the user by a certain, some or all users.
2) Save records of conversation invitations by a certain, some or all groups.
3) Set a time length of saving a log record (that is, a save period).
4) Set a calling user priority level. That is, set a level for a calling user. When a user is on-line, the server first performs calling for a calling user having a high level, and invites a user to join in an existing conversation.
5) Set a group priority level. That is, set a level for a group. When a user is on-line, the server first performs calling for a group having a high level, and invites the user to join in an existing conversation.
6) Set time priority calling. That is, set to perform invitation according to callings in a certain period of time or callings that occur recently.
7) Set the number of concurrent invitations. That is, after the user is on-line, if currently a plurality of conversations exists, the server selects N conversations to initiate conversation invitations according to the number N of the concurrent invitations set by the user.
8) Set a no-invitation list for individuals or groups. That is, when a user is on-line, even though currently the conversations of the individuals or groups still exist, the server cannot initiate invitation.

In Step S221, the InviteLogBox accepts settings by the user B, returns OK information, and sends calling records.

In Steps S218 to S221, the acquiring the record of being called, the setting the call policy, and the getting registered and on-line by the user B are not subject to a certain time sequence, which can be flexibly set as long as information interactions between the user and the InviteLogBox is realized.

In Step S222, the user B sends an SIP Register request to a core network to get registered and on-line.

In Step S223, the core network returns 200 OK.

In Step S224, the core network sends a Register to the PoC server to inform that the user B is on-line.

In Step S225, the PoC server returns 200 OK.

In Step S226, the PoC server sends a call policy search request to the InviteLogBox to acquire an on-line call policy of the user B.

In Step S227, the InviteLogBox returns OK and returns the called policy of the user B.

In Step S228, the PoC server examines that the conversation established by the user A still exists and sends an SIP Invite request to the user B according to the called policy of the user B to initiatively invite the user B to join in the conversation established by the user A.

In Step S229, the core network sends the Invite request to the user B.

In Step S230, the user B returns 200 OK and agrees to join in the conversation.

In Step S231, the core network forwards the 200 OK response to the PoC server.

In Step S232, the PoC server sends the ACK response.

In Step S233, the core network forwards the ACK to the user B.

In this embodiment, when the called user is off-line, the PoC conversation server instructs the InviteLogBox to save the off-line calling information of the user. When the user is on-line and the call policy is set, the PoC conversation server enables the user to join in the conversation that is not ended following the intention of the user according to the call policy, so as to reduce a probability that the user misses important conversation information.

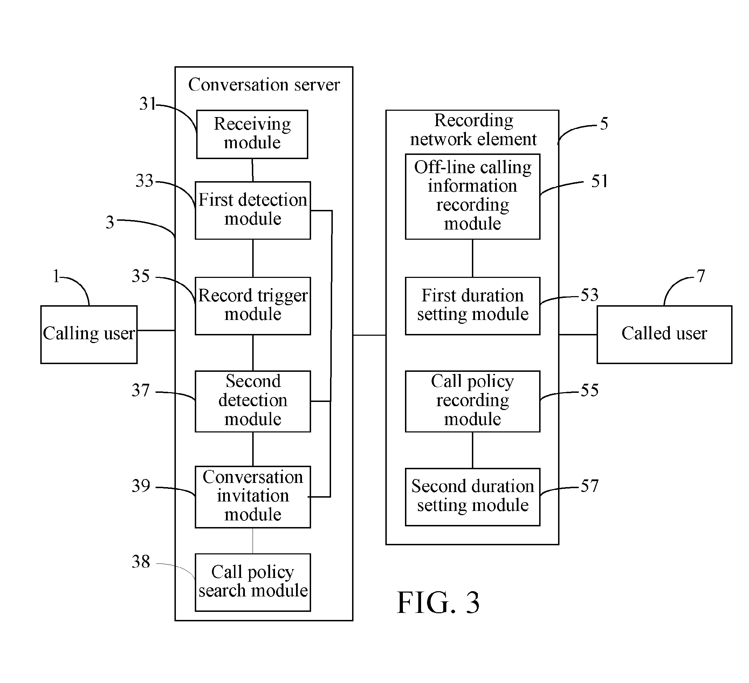

In a third embodiment, the present invention provides a conversation system. As shown in FIG. 3, the system includes a calling user 1, a conversation server 3, a recording network element 5, and a called user 7.

The conversation server 3 is adapted to receive a calling request that the calling user 1 in a conversation invites the called user 7 to join in the conversation, detect whether called user 7 is on-line according to the calling request, when the called user 7 is on-line, further detect whether the conversation in the off-line calling information recorded by the recording network element 5 is ended, and if the conversation is not ended, enable the called user 7 to join in the conversation.

The recording network element 5 is adapted to record off-line calling information of inviting the called user 7 to join in the conversation.

The conversation server 3 includes a receiving module 31, a first detection module 33, a record trigger module 35, a second detection module 37, and a conversation invitation module 39.

The receiving module 31 is adapted to receive a calling request that the calling user 1 in a conversation invites the called user 7 to join in the conversation.

The first detection module 33 is adapted to detect whether the called user 7 is on-line.

The record trigger module 35 is adapted to trigger the recording network element 5 to record off-line calling information of inviting the called user 7 to join in the conversation when the first detection module 33 detects that the called user 7 is off-line.

The second detection module 37 is adapted to further detect whether the conversation in the off-line calling information of the called user 7 is ended when the first detection module 33 detects that the called user 7 is on-line.

The conversation invitation module 39 is adapted to enable the called user 7 that is on-line as detected by the first detection module 33 to join in the conversation in the off-line calling information that is not ended as detected by the second detection module 37.

The conversation server 3 can further include a call policy search module 38, which is adapted to search a call policy of the called user 7, so that the conversation invitation module 39 enables the called user 7 to join in the conversation corresponding to the call policy according to the call policy.

The recording network element 5 includes an off-line calling information recording module 51, which is adapted to record off-line calling information that the calling user 1 invites the called user 7 to join in the conversation when the called user 7 is off-line, and send the off-line calling information to the off-line called user 7.

The recording network element 5 further includes a first duration setting module 53, a call policy recording module 55, and a second duration setting module 57.

The first duration setting module 53 is adapted to set a save period of the off-line calling information recorded by the off-line calling information recording module 51.

The call policy recording module 55 is adapted to record the call policy set by the called user 7 according to the off-line calling information of the off-line calling information recording module 51.

The second duration setting module 57 is adapted to set a save period of the call policy recorded by the call policy recording module 55.

In the recording network element 5, when the save period of the off-line calling information exceeds the save period set by the first duration setting module 53 or the save period of the call policy exceeds the save period set by the second duration setting module 57, the corresponding off-line calling information and call policy are deleted, or the corresponding off-line calling information and call policy are set to an invalid state and log data is saved, so as to release a storage space, and the recorded off-line calling information and call policy are managed in order.

In the device, the recording network element 5 can be integrated in the conversation server 3 and can also be separately disposed. The recording network element 5 interacts with the conversation server 3 and the called user 7, so as to save the off-line calling information of the called user 7 and reduce a probability of losing important conversation information, and enhance a user experience by setting and invoking the call policy.

The technical solutions in the embodiments of the present invention have the following advantages.

By providing a recording network element, the user can learn information of being called when the user is not on-line and inform the server of how to save the records that the user is called. When the user is on-line, the server can automatically invite the user to join in conversations that still exist currently according to the policy set by the user. Such a device can reduce a probability that the user misses important conversation information and can enhance a good use experience of the user.

It is understandable to those skilled in the art that the accompanying drawings are used for illustrating the preferred embodiments only, and the modules or processes in the accompanying drawings are not mandatory.

In addition, the modules in the apparatus in the embodiments of the present invention may be distributed in the way described herein, or distributed in other ways, for example, in one or more other apparatuses. The modules in the foregoing embodiments may be combined into one, or split into several submodules.

The serial number of the embodiments given above is for clear description only, and does not represent the order of preference.

The solution stated in Claims defines the scope of the present invention.

Through the descriptions of the preceding embodiments, those skilled in the art may understand that the present invention may be implemented by using hardware only or by using software and a necessary universal hardware platform. Based on such understandings, the technical solution under the present invention may be embodied in the form of a software product. The software product may be stored in a nonvolatile storage medium, which can be a Compact Disk Read-Only Memory (CD-ROM), Universal Serial Bus (USB) flash drive, or a removable hard drive. The software product includes a number of instructions that enable a computer device (personal computer, server, or network device) to execute the methods provided in the embodiments of the present invention.

The above descriptions are merely preferred embodiments of the present invention, but not intended to limit the scope of the present invention. Any modification, equivalent replacement, or improvement made without departing from the principle of the present invention should fall within the scope of the present invention.

## Claims

1. A method for conversation, comprising:
receiving a calling request that a calling user in a conversation invites a called user to join in the conversation;
detecting whether the called user is on-line according to the calling request, and when it is detected that the called user is off-line, recording off-line calling information that the called user is invited to join in the conversation; and
when it is detected that the called user is on-line, detecting whether the conversation in the off-line calling information is ended, and if not, enabling the called user to join in the conversation.

2. The method according to claim 1, further comprising:
acquiring the off-line calling information before the called user is on-line, and setting and recording a call policy according to the off-line calling information; and
wherein when the called user is on-line, it is detected whether the conversation in the off-line calling information is ended, and if not, the enabling the called user to join in the conversation comprises:
when the called user is on-line and the conversation in the off-line calling information is not ended, acquiring the call policy, enabling the called user to join in a conversation corresponding to the call policy according to the call policy.

3. The method according to claim 2, wherein the acquiring the off-line calling information before the called user is on-line comprises:
sending, by the called user, a request, and receiving the off-line calling information corresponding to the request; or
receiving, by the called user, the off-line calling information in real time or regularly.

4. The method according to claim 2, wherein the setting the call policy according to the off-line calling information comprises:
setting one or more of priority information of a calling user, priority information of conversation start time, black list information, and calling user information of concurrent invitation in the off-line calling information according to the off-line calling information.

5. The method according to claim 1, further comprising:
setting the off-line calling information and a save period of a call policy set according to the off-line calling information; and
deleting the off-line calling information and the call policy after the save period expires, or
setting the off-line calling information and the call policy to an invalid state and saving log data.

6. A conversation server, comprising:
a receiving module, adapted to receive a calling request that a calling user in a conversation invites a called user to join in the conversation;
a first detection module, adapted to detect whether the called user is on-line;
a record trigger module, adapted to trigger a recording network element to record off-line calling information of inviting the called user to join in the conversation when the first detection module detects that the called user is off-line;
a second detection module, adapted to further detect whether a conversation in the off-line calling information of the called user is ended when the first detection module detects that the called user is on-line; and
a conversation invitation module, adapted to enable the called user that is on-line as detected by the first detection module to join in the conversation that in the off-line calling information is not ended as detected by the second detection module.

7. The conversation server according to claim 6, further comprising:
a call policy search module, adapted to search a call policy of the called user; wherein
the conversation invitation module is specifically adapted to enable the called user that is on-line as detected by the first detection module to join in a conversation corresponding to the call policy in the off-line calling information that is not ended as detected by the second detection module according to the call policy.

8. A recording network element, comprising:
an off-line calling information recording module, adapted to record off-line calling information that a calling user invites a called user to join in a conversation when the called user is off-line, so as to facilitate a conversation server to detect whether the conversation in the off-line calling information is ended when the called user is on-line, and if the conversation is not ended, enable the called user to join in the conversation.

9. The recording network element according to claim 8, further comprising:
a first duration setting module, adapted to set a save period of the off-line calling information recorded by the off-line calling information recording module.

10. The recording network element according to claim 8, further comprising:
a call policy recording module, adapted to record a call policy set by the called user according to the off-line calling information of the off-line calling information recording module, wherein the call policy is adapted to enable the called user to join in a corresponding conversation, and
the off-line calling information recording module is further adapted to send the off-line calling information to the off-line called user.

11. The recording network element according to claim 10, further comprising:
a second duration setting module, adapted to set a save period of the call policy recorded by the call policy recording module.

12. A conversation system, comprising a conversation server and a recording network element, wherein
the conversation server is adapted to receive a calling request that a calling user in a conversation invites a called user to join in the conversation, detect whether the called user is on-line according to the calling request, and when it is detected that the called user is on-line, trigger the recording network element to record off-line calling information of inviting the called user to join in the conversation, further detect whether the conversation in the off-line calling information is ended, if not, enable the called user that is on-line as detected to join in the conversation,
and the recording network element is adapted to record the off-line calling information of inviting the called user to join in the conversation.
